# EUROPÄISCHE PATENTANMELDUNG

(11) **EP 2 445 078 A1**
(43) Veröffentlichungstag der Anmeldung: **25.04.2012**
(21) Anmeldenummer: 10188712.3
(22) Anmeldetag: 25.10.2010
(51) Int. Cl.: H02J 3/36, H02M 1/12, H02M 7/5387

(54) **Umrichterschaltung**

(71) Anmelder: ABB Technology AG, 8050 Zürich (CH)
(72) Erfinder: Thurnherr, Tobias, 5408, Ennetbaden (CH); Gaupp, Osvin, 5400, Baden (CH); Schaub, Christoph, 5400, Baden (CH)
(74) Vertreter: ABB Patent Attorneys

(57) **Zusammenfassung**

Es wird eine Umrichterschaltung angegeben, die eine Umrichtereinheit (1) aufweist, an deren Gleichspannungsseite ein Gleichspannungskreis (2) verbunden ist. Die Umrichterschaltung umfasst zudem einen Transformator (3), der zumindest mit einem Teil der Wechselspannungsanschlüssen (4) der Umrichtereinheit (1) verbunden ist, wobei der Transformator (3) einen Primärwicklungssatz (5) und einen Sekundärwicklungssatz (6) umfasst und der Primärwicklungssatz (5) mindestens eine Primärwicklung (51) und der Sekundärwicklungssatz (6) mindestens eine Sekundärwicklung (61) aufweist. Damit eine kleine Dimensionierung, ein geringer Platzbedarf, ein geringes Gewicht und wenig Transformatorverluste erreicht werden können, ist eine erste Anzahl (n) Wechselspannungsanschlüsse (4) mit dem Primärwicklungssatz (5) und eine zweite Anzahl (p) Wechselspannungsanschlüsse (4) mit dem Sekundärwicklungssatz (6) verbunden.

## Beschreibung

### Technisches Gebiet

Die Erfindung bezieht sich auf das Gebiet der Leistungselektronik. Sie geht aus von einer Umrichterschaltung gemäss dem Oberbegriff des unabhängigen Anspruchs.

### Stand der Technik

Umrichterschaltungen werden heute in einer Vielzahl von Anwendungen eingesetzt. Typischerweise umfasst eine Umrichterschaltung eine Umrichtereinheit, an deren Gleichspannungsseite ein Gleichspannungskreis verbunden ist. Zwecks einer Spannungsanpassung an der Wechselspannungsseite der Umrichtereinheit und/oder zur Reduzierung von unerwünschten Schwingungen an der Wechselspannungsseite der Umrichtereinheit, wie beispielsweise Oberschwingungen bezüglich einer gewünschten Grundschwingung, ist typischerweise mit den Wechselspannungsanschlüssen der Umrichtereinheit Primärwicklungen eines Transformators verbunden, wobei die zugehörigen Sekundärwicklungen beispielsweise mit einer elektrischen Last und/oder mit einem elektrischen Wechselspannungsnetz verbindbar sind.

Zur Übertragung grosser Leistungen ist der Transformator baulich entsprechend gross zu dimensionieren, wodurch ein erheblicher Platzbedarf des Transformators, ein damit einhergehendes hohes Gewicht und hohe Transformatorverluste resultieren. Durch die Baugrösse, den Platzbedarf, das Gewicht und durch die Transformatorverluste ergeben sich zudem sehr hohe Kosten.

### Darstellung der Erfindung

Aufgabe der Erfindung ist es deshalb, eine Umrichterschaltung mit einer Umrichtereinheit und einem Transformator anzugeben, welche klein, eine geringen Platzbedarf, ein geringes Gewicht und wenig Transformatorverluste aufweist. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung umfasst eine Umrichtereinheit, an deren Gleichspannungsseite ein Gleichspannungskreis verbunden ist. Desweiteren umfasst die Umrichterschaltung einen Transformator, der zumindest mit einem Teil der Wechselspannungsanschlüssen der Umrichtereinheit verbunden ist, wobei der Transformator einen Primärwicklungssatz und einen Sekundärwicklungssatz umfasst und der Primärwicklungssatz mindestens eine Primärwicklung und der Sekundärwicklungssatz mindestens eine Sekundärwicklung aufweist. Nach der Erfindung ist nun eine erste Anzahl Wechselspannungsanschlüsse mit dem Primärwicklungssatz und eine zweite Anzahl Wechselspannungsanschlüsse mit dem Sekundärwicklungssatz verbunden. Dadurch, dass lediglich eine erste Anzahl Wechselspannungsanschlüsse mit dem Primärwicklungssatz verbunden ist, wird auch nur ein Teil einer beispielsweise zu übertragenden elektrischen Energie vom Primärwicklungssatz über den Transformatorkern zu dem Sekundärwicklungssatz übertragen, so dass der Transformator baulich entsprechend klein dimensioniert werden kann, somit einen geringen Platzbedarf, ein geringes Gewicht und wenig Transformatorverluste aufweist. Die Übertragung des anderen Teils der zu übertragenden elektrischen Energie erfolgt schliesslich direkt zu dem Sekundärwicklungssatz, an dessen Wicklungen dann die gesamte elektrische Energie zu Verfügung steht.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnung

Es zeigen:
- Fig. 1: eine erste Ausführungsform einer erfindungsgemässen Umrichterschaltung,
- Fig. 2: eine Variante der ersten Ausführungsform der erfindungsgemässen Umrichterschaltung gemäss Fig. 1,
- Fig. 3: eine zweite Ausführungsform der erfindungsgemässen Umrichterschaltung,
- Fig. 4: eine dritte Ausführungsform der erfindungsgemässen Umrichterschaltung,
- Fig. 5: eine vierte Ausführungsform der erfindungsgemässen Umrichterschaltung,
- Fig. 6: eine fünfte Ausführungsform der erfindungsgemässen Umrichterschaltung,
- Fig. 7: eine sechste Ausführungsform der erfindungsgemässen Umrichterschaltung und
- Fig. 8: eine siebte Ausführungsform der erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

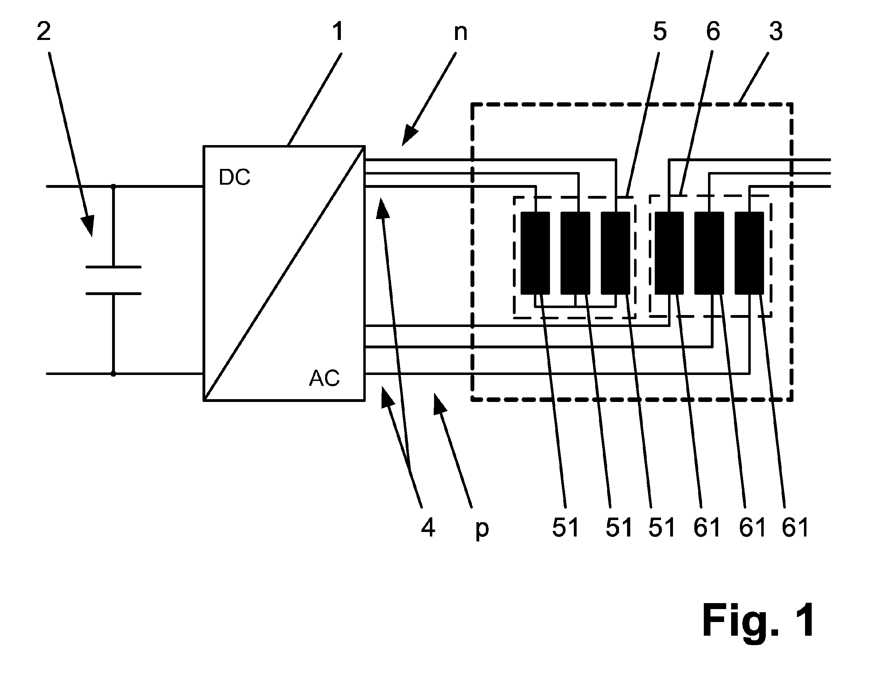

In Fig. 1 ist eine erste Ausführungsform einer erfindungsgemässen Umrichterschaltung dargestellt. Darin umfasst die Umrichterschaltung eine Umrichtereinheit 1, an deren Gleichspannungsseite ein Gleichspannungskreis 2 verbunden ist. Der Gleichspannungszwischenkreis kann beispielsweise einen Kondensator aufweisen, wie in Fig. 1 gezeigt, allgemein aber auch mindestens einen Kondensator aufweisen. Desweiteren umfasst die Umrichterschaltung einen Transformator 3, der zumindest mit einem Teil der Wechselspannungsanschlüssen 4 der Umrichtereinheit 1 verbunden ist, wobei der Transformator 3 einen Primärwicklungssatz 5 und einen Sekundärwicklungssatz 6 umfasst und der Primärwicklungssatz 5 allgemein mindestens eine Primärwicklung 51 und der Sekundärwicklungssatz 6 allgemein mindestens eine Sekundärwicklung 61 aufweist. In Fig. 1 weist der Primärwicklungssatz 5 drei Primärwicklungen 51 und der Sekundärwicklungssatz 6 ebenfalls drei Sekundärwicklungen 61 auf. Erfindungsgemäss ist nun eine erste Anzahl n Wechselspannungsanschlüsse 4 mit dem Primärwicklungssatz 5 und eine zweite Anzahl p Wechselspannungsanschlüsse 4 mit dem Sekundärwicklungssatz 6 verbunden. In Fig. 1 ist beispielhaft die erste Anzahl n=3 Wechselspannungsanschlüsse 4 und die zweite Anzahl p=3 Wechselspannungsanschlüsse 4 und die drei Primärwicklungen 51 des Primärwicklungssatzes 5 sind beispielhaft als Sternschaltung geschaltet. Entsprechend der zweiten Anzahl p=3 der mit dem Sekundärwicklungssatz 6 verbundenen Wechselspannungsanschlüsse 4 weist der Sekundärwicklungssatz 6 auch drei Phasenanschlüsse auf, an die beispielsweise eine elektrische Last oder ein elektrisches Wechselspannungsnetz angeschlossen werden kann.

Dadurch, dass lediglich eine erste Anzahl n Wechselspannungsanschlüsse 4 mit dem Primärwicklungssatz 5 verbunden ist, wird auch nur ein Teil einer beispielsweise zu übertragenden elektrischen Energie vom Primärwicklungssatz 5 über den Transformatorkern zu dem Sekundärwicklungssatz 6 übertragen, so dass der Transformator 3 baulich entsprechend klein dimensioniert werden kann, demzufolge einen geringen Platzbedarf, ein geringes Gewicht und geringe Transformatorverluste aufweist. Die Übertragung dieses Teils der Energie somit erfolgt über die galvanische Trennung des Transformators 3. Die Übertragung des anderen Teils der zu übertragenden elektrischen Energie erfolgt schliesslich direkt, also ohne galvanische Trennung, zu dem Sekundärwicklungssatz 6, an dessen Wicklungen dann die gesamte elektrische Energie zu Verfügung steht. Es versteht sich, dass die elektrische Energie auch über den Sekundärwicklungssatz zu den Wechselspannungsanschlüssen 4 übertragen werden kann, wobei dann ein Teil dieser elektrischen Energie über den Transformatorkern zu dem Primärwicklungssatz 5 und zu der ersten Anzahl n der Wechselspannungsanschlüsse 4 übertragen wird und der andere Teil der elektrischen Energie direkt von dem Primärwicklungssatz 6 zu der zweiten Anzahl p der Wechselspannungsanschlüsse 4 übertragen wird. Allgemein ist es auch denkbar, mehrere Transformatoren 3 in der Umrichterschaltung einzusetzen, wobei dann bezüglich eines jeden Transformators 3 eine erste Anzahl n Wechselspannungsanschlüsse 4 mit dem Primärwicklungssatz 5 des jeweiligen Transformators 3 und der Sekundärwicklungssatz 6 des jeweiligen Transformators 3 mit dem Sekundärwicklungssatz 6 des vorherigen Transformators 3 verbunden ist.

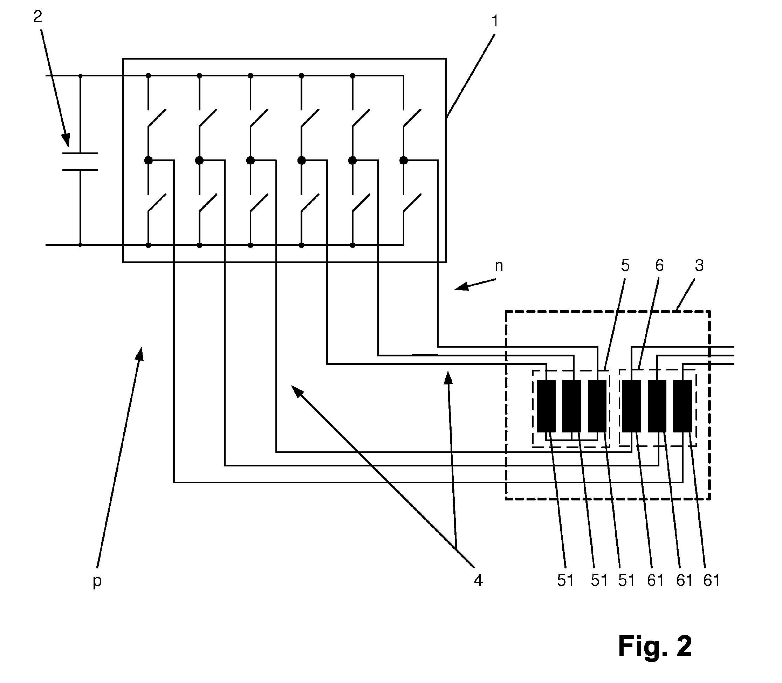

In Fig. 2 ist eine detaillierte Variante der ersten Ausführungsform der Umrichterschaltung gemäss Fig. 1 gezeigt. Die Umrichtereinheit 1 weist darin für jeden Wechselspannungsanschluss 4 einen Phasenbaustein auf, der beispielhaft in Halbbrückenschaltung realisiert ist. Denkbar ist allgemein jedwede dem Fachmann bekannte Schaltungsart solcher Phasenbausteine. Die Schalter eines jeden Phasenbausteins sind vorzugsweise als ansteuerbare bidirektionale Leistungshalbleiterschalter mit gesteuerter unidirektionaler Stromführungsrichtung ausgebildet. Der jeweilige ansteuerbare Leistungshalbleiterschalter ist insbesondere als Abschaltthyristor (GTO - Gate Turn-Off Thyristor) oder als integrierter Thyristor mit kommutierter Ansteuerelektrode (IGCT - Integrated Gate Commutated Thyristor) mit jeweils einer antiparallel geschalteten Diode ausgeführt. Es ist aber auch denkbar, einen ansteuerbaren Leistungshalbleiterschalter beispielsweise als Leistungs-MOSFET mit zusätzlich antiparallel geschalteter Diode oder als Bipolartransistor mit isoliert angeordneter Gateelektrode (IGBT) mit zusätzlich antiparallel geschalteter Diode auszubilden.

Wie in Fig. 1 und Fig. 2 beispielhaft gezeigt, ist entspricht allgemein die erste mit dem Primärwicklungssatz 5 verbundene Anzahl n Wechselspannungsanschlüsse 4 der zweiten mit dem Sekundärwicklungssatz 6 verbundenen Anzahl p Wechselspannungsanschlüsse 4.

Vorzugsweise ist der Transformator 3 mit sämtlichen Wechselspannungsanschlüssen der Umrichtereinheit 1 verbunden, wobei, wie vorstehend bereits erwähnt, dann die erste Anzahl n Wechselspannungsanschlüsse 4 mit dem Primärwicklungssatz 5 und die zweite Anzahl p Wechselspannungsanschlüsse 4 mit dem Sekundärwicklungssatz 6 verbunden ist.

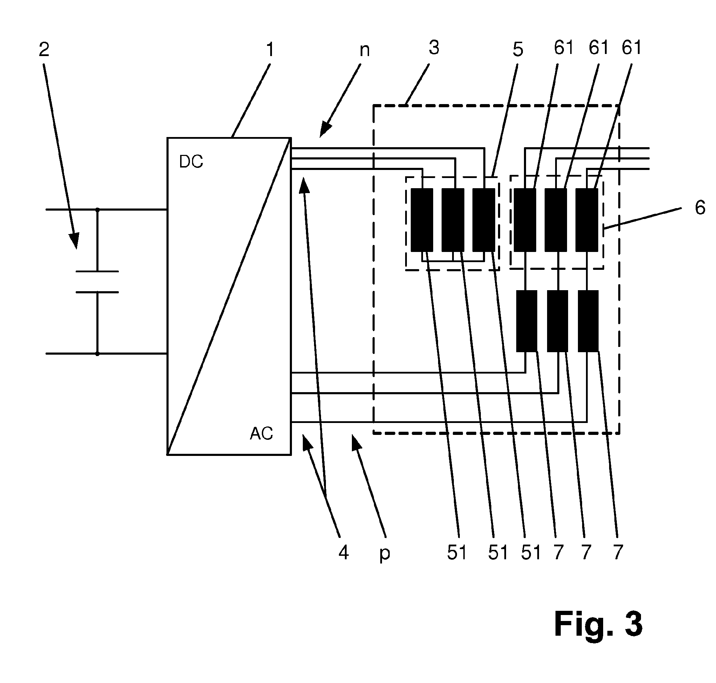

In Fig. 3 ist eine zweite Ausführungsform der erfindungsgemässen Umrichterschaltung gezeigt, in der in jede Verbindung der Wechselspannungsanschlüsse 4 mit dem Sekundärwicklungssatz 6 jeweils eine Induktivität 7 seriell eingeschaltet ist. Die jeweilige Induktivität 7 dient vorteilhaft der Symmetrierung der Impedanzen. Vorzugsweise ist die jeweilige Induktivität 7 in das Gehäuse des Transformators 3 integriert, so dass mit Vorteil ein kompakter Aufbau mit einem geringen Patzbedarf realisiert werden kann.

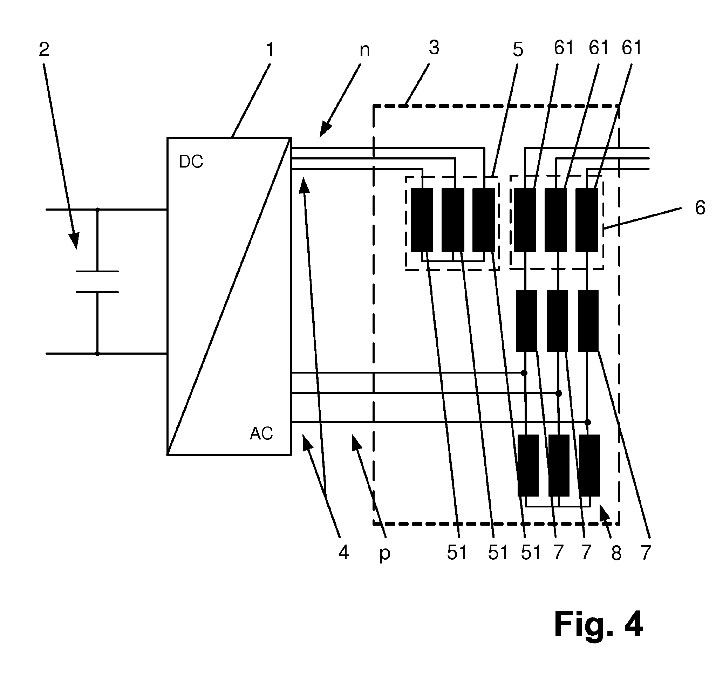

Vorzugsweise ist das Übersetzungsverhältnis des Transformators 31:1. Wird jedoch ein anderes Übersetzungsverhältnis, beispielsweise 2:1, gewählt, so kann es aus Symmetrierungsgründen sinnvoll sein, in die Verbindungen der Wechselspannungsanschlüsse 4 mit dem Sekundärwicklungssatz 6 einen Autotransformator 8 eingeschaltet. In einer dritten Ausführungsform der erfindungsgemässen Umrichterschaltung nach Fig. 4 ist die Umrichterschaltung mit einem solchen Autotransformator 8 beispielhaft gezeigt. Vorzugsweise ist der Autotransformator 8 in das Gehäuse des Transformators 3 integriert, wodurch vorteilhaft ein kompakter Aufbau mit einem geringen Patzbedarf erzielt werden kann.

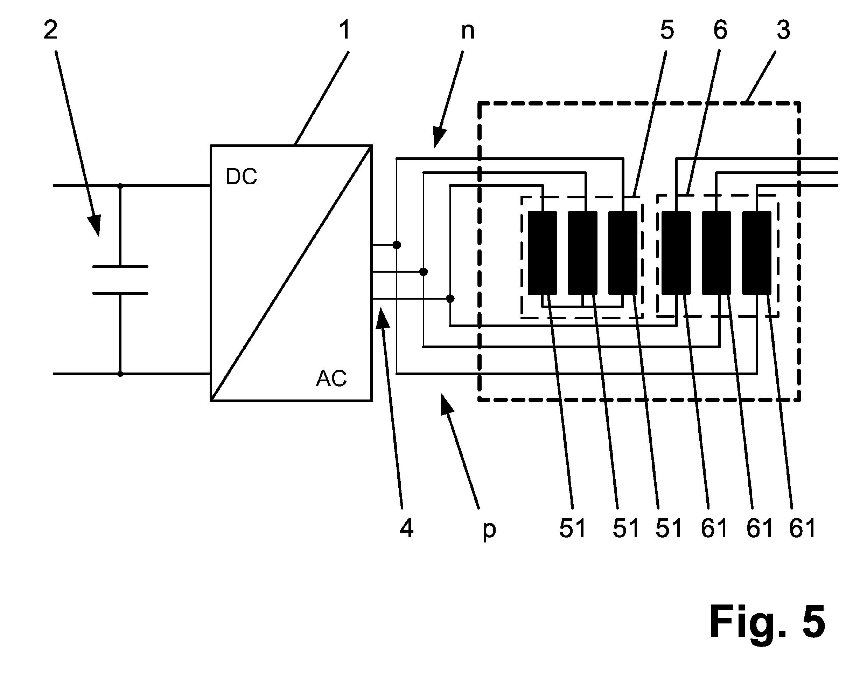

In Fig. 5 ist eine vierte Ausführungsform der erfindungsgemässen Umrichterschaltung dargestellt. Darin sind sämtliche Wechselspannungsanschlüsse 4 mit dem Primärwicklungssatz 5 und mit dem Sekundärwicklungssatz 6 verbunden. Gemäss Fig. 5 ist die erste Anzahl n=3 der mit dem Primärwicklungssatz 5 verbundenen Wechselspannungsanschlüsse 4 und die zweite Anzahl p=3 der mit dem Sekundärwicklungssatz 6 verbundenen Wechselspannungsanschlüsse 4. Entsprechend der zweiten Anzahl p=3 der mit dem Sekundärwicklungssatz 6 verbundenen Wechselspannungsanschlüsse 4 weist der Sekundärwicklungssatz 6 auch drei Phasenanschlüsse auf, an die beispielsweise eine elektrische Last oder ein elektrisches Wechselspannungsnetz angeschlossen werden kann. Dadurch, dass sämtliche Wechselspannungsanschlüsse 4 mit dem Primärwicklungssatz 5 und zusätzlich auch mit dem Sekundärwicklungssatz 6 verbunden sind, ist die Ausführungsform gemäss Fig. 5 prädestiniert für Umrichterschaltungen mit einer geringen Gesamtzahl an Wechselspannungsanschlüssen 4, die bezüglich der Ausführungsform nach Fig. 5 beispielsweise lediglich bei drei Wechselspannungsanschlüssen 4 liegt.

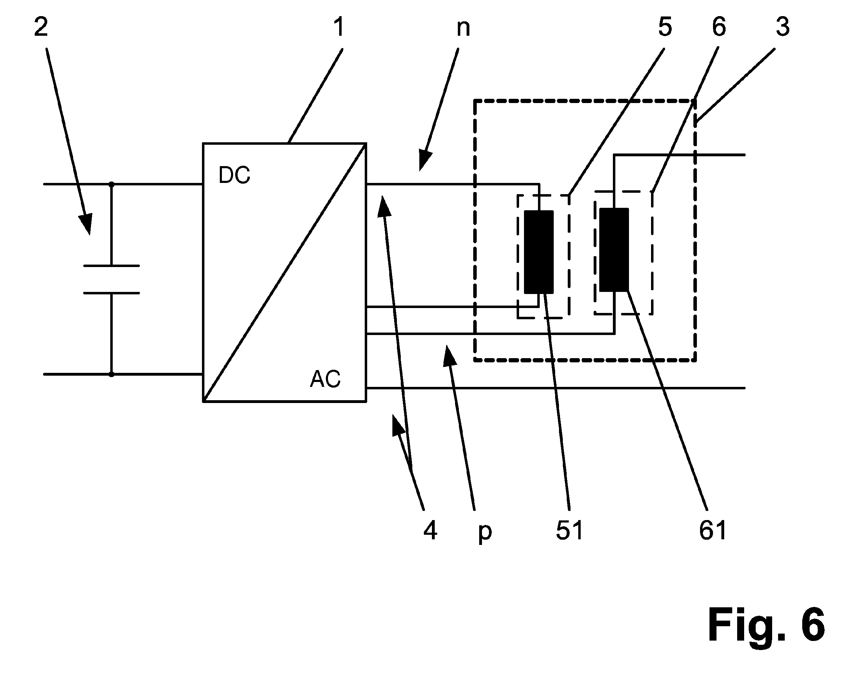

In Fig. 6 ist eine fünfte Ausführungsform der erfindungsgemässen Umrichterschaltung angegeben, bei der die erste Anzahl n=2 der mit dem Primärwicklungssatz 5 verbundenen Wechselspannungsanschlüsse 4 und die zweite Anzahl p=1 der mit dem Sekundärwicklungssatz 6 verbundenen Wechselspannungsanschlüsse 4 ist. Entsprechend der zweiten Anzahl p=1 der mit dem Sekundärwicklungssatz 6 verbundenen Wechselspannungsanschlüsse 4 weist der Sekundärwicklungssatz 6 auch einen Phasenanschluss auf. Ein weiterer Wechselspannungsanschluss 4 der Umrichtereinheit 2 gemäss Fig. 6 bietet dann zusammen mit dem vorstehend genannten Phasenanschluss die Möglichkeit des Anschlusses einer elektrische Last oder eines elektrischen Wechselspannungsnetzes.

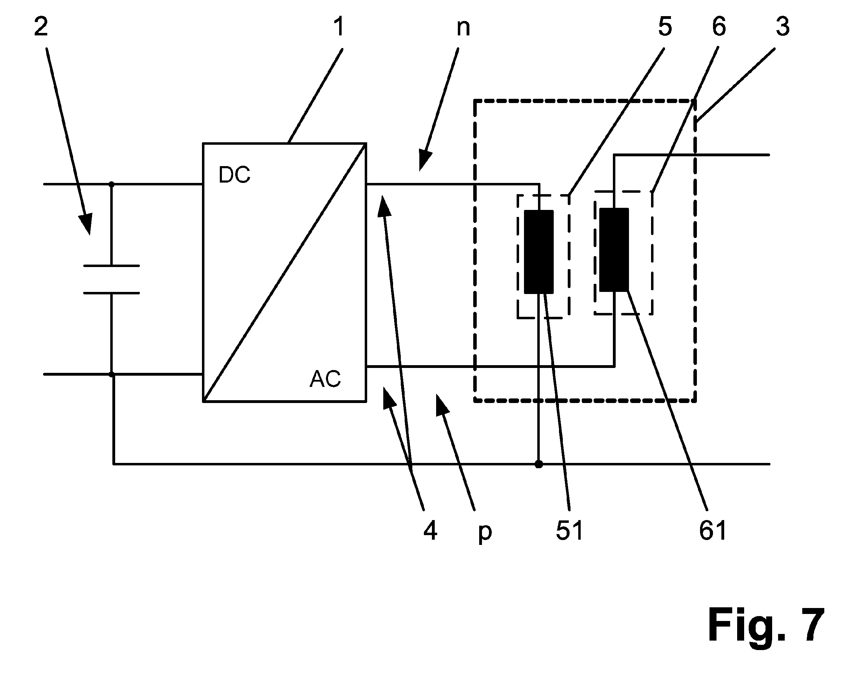

In Fig. 7 ist eine sechste Ausführungsform der erfindungsgemässen Umrichterschaltung angegeben, bei der die erste Anzahl n=1 der mit dem Primärwicklungssatz 5 verbundenen Wechselspannungsanschlüsse 4 und die zweite Anzahl p=1 der mit dem Sekundärwicklungssatz 6 verbundenen Wechselspannungsanschlüsse 4 ist. Entsprechend der zweiten Anzahl p=1 der mit dem Sekundärwicklungssatz 6 verbundenen Wechselspannungsanschlüsse 4 weist der Sekundärwicklungssatz 6 auch einen Phasenanschluss auf. Eine Verbindung vom zum Gleichspannungskreis 2 bildet einen weiteren Anschluss, der dann zusammen mit dem vorstehend genannten Phasenanschluss die Möglichkeit des Anschlusses einer elektrische Last oder eines elektrischen Wechselspannungsnetzes erlaubt.

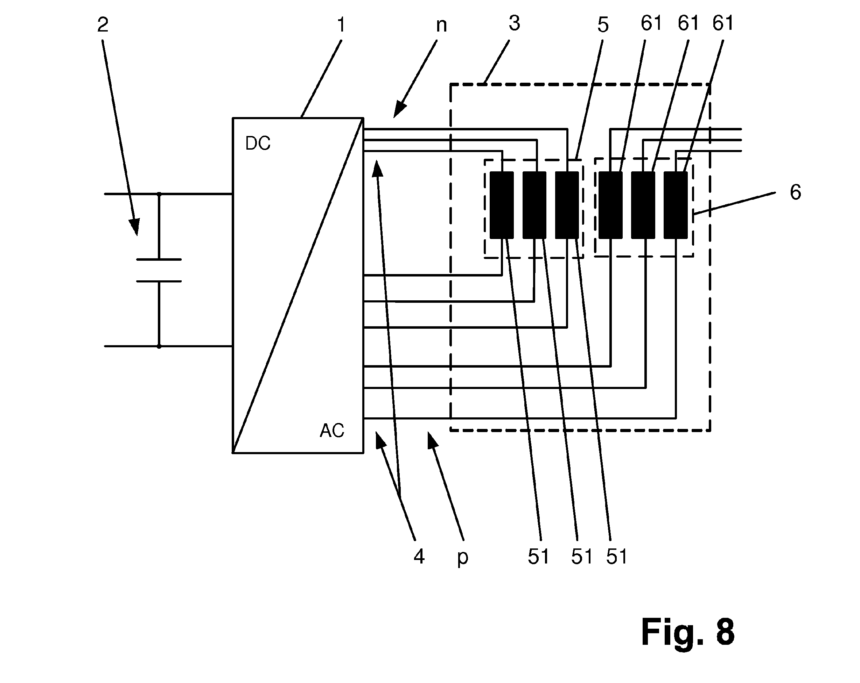

In Fig. 8 ist eine siebte Ausführungsform der erfindungsgemässen Umrichterschaltung angegeben, bei der die erste Anzahl n=6 der mit dem Primärwicklungssatz 5 verbundenen Wechselspannungsanschlüsse 4 und die zweite Anzahl p=3 der mit dem Sekundärwicklungssatz 6 verbundenen Wechselspannungsanschlüsse 4 ist. Entsprechend der zweiten Anzahl p=3 der mit dem Sekundärwicklungssatz 6 verbundenen Wechselspannungsanschlüsse 4 weist der Sekundärwicklungssatz 6 auch drei Phasenanschlüsse auf, an die beispielsweise eine elektrische Last oder ein elektrisches Wechselspannungsnetz angeschlossen werden kann.

### Bezugszeichenliste

- 1: Umrichtereinheit
- 2: Gleichspannungskreis
- 3: Transformator
- 4: Wechselspannungsanschlüsse
- 5: Primärwicklungssatz
- 51: Primärwicklung
- 6: Sekundärwicklungssatz
- 61: Sekundärwicklung
- 7: Induktivität
- 8: Autotransformator
- n: erste Anzahl Wechselspannungsanschlüsse
- p: zweite Anzahl Wechselspannungsanschlüsse

## Patentansprüche

1. Umrichterschaltung mit einer Umrichtereinheit (1), an deren Gleichspannungsseite ein Gleichspannungskreis (2) verbunden ist, mit einem Transformator (3), der zumindest mit einem Teil der Wechselspannungsanschlüssen (4) der Umrichtereinheit (1) verbunden ist, wobei der Transformator (3) einen Primärwicklungssatz (5) und einen Sekundärwicklungssatz (6) umfasst und der Primärwicklungssatz (5) mindestens eine Primärwicklung (51) und der Sekundärwicklungssatz (6) mindestens eine Sekundärwicklung (61) aufweist,
**dadurch gekennzeichnet,**
**dass** eine erste Anzahl (n) Wechselspannungsanschlüsse (4) mit dem Primärwicklungssatz (5) und eine zweite Anzahl (p) Wechselspannungsanschlüsse (4) mit dem Sekundärwicklungssatz (6) verbunden ist.

2. Umrichterschaltung nach Anspruch 1, **dadurch gekennzeichnet, dass** die erste mit dem Primärwicklungssatz (5) verbundene Anzahl (n) Wechselspannungsanschlüsse (4) der zweiten mit dem Sekundärwicklungssatz (6) verbundene Anzahl (p) Wechselspannungsanschlüsse (4) entspricht.

3. Umrichterschaltung nach Anspruch 1 oder 2, **dadurch gekennzeichnet, dass** der Transformator (3) mit sämtlichen Wechselspannungsanschlüssen (4) der Umrichtereinheit (1) verbunden ist.

4. Umrichterschaltung nach einem der Ansprüche 1 bis 3, **dadurch gekennzeichnet, dass** in jede Verbindung der Wechselspannungsanschlüsse (4) mit dem Sekundärwicklungssatz (6) jeweils eine Induktivität (7) seriell eingeschaltet ist.

5. Umrichterschaltung nach Anspruch 4, **dadurch gekennzeichnet, dass** die jeweilige Induktivität (7) in das Gehäuse des Transformators (3) integriert ist.

6. Umrichterschaltung nach einem der Ansprüche 1 bis 3, **dadurch gekennzeichnet, dass** in die Verbindungen der Wechselspannungsanschlüsse (4) mit dem Sekundärwicklungssatz (6) ein Autotransformator (8) eingeschaltet ist.

7. Umrichterschaltung nach Anspruch 6, **dadurch gekennzeichnet, dass** der Autotransformator (8) in das Gehäuse des Transformators (3) integriert ist.

8. Umrichterschaltung nach Anspruch 1, **dadurch gekennzeichnet, dass** sämtliche Wechselspannungsanschlüsse (4) mit dem Primärwicklungssatz (5) und mit dem Sekundärwicklungssatz (6) verbunden sind.
